# EUROPEAN PATENT APPLICATION

(11) **EP 1 775 178 A2**
(43) Date of publication of application: **18.04.2007**
(21) Application number: 06019503.9
(22) Date of filing: 18.09.2006
(51) Int. Cl.: B60R 21/26

(54) **Passenger seat air bag**

(30) Priority: 12.10.2005 JP 2005297961
(71) Applicant: TAKATA CORPORATION, Minato-ku, Tokyo 106-8510 (JP)
(72) Inventor: Murakami, Yoshiki Takata Corporation, Tokyo 106-8510 (JP)
(74) Representative: Vossius & Partner

(57) **Abstract**

A passenger constraining apparatus is provided in which an airbag can be fixed to a seat pan using a gas introducing member. An airbag 11 is arranged between a seat cushion and a seat pan 1, and a midsection in the longitudinal direction thereof is fixed to the seat pan 1 by a mounting member 12A. The mounting member 12A includes an inner member 12a for holding down a bottom surface of the airbag 11 against the seat pan from the inner side thereof, an stud bolt 12b and an extending member 12c extending outwardly of the airbag 11 so as to pass through the bottom surface of the airbag 11, and a gas channel 12d which passes through the extending member 12c and is communicated with the interior of the airbag 11. By the stud bolt 12b being secured to the seat pan 1, the bottom surface of the airbag 11 is clamped between the inner member 12a and the seat pan 1. A gas supply duct 14 from an inflator 13 is connected to a distal end of the extending member 12c (Fig. 2).

## Description

The present invention relates to a passenger constraining apparatus for constraining a passenger on a seat of a vehicle such as an automotive vehicle upon collision and, more specifically, to a passenger constraining apparatus configured to prevent a lumber part of the passenger from moving forward or downward by arranging an airbag arranged between a seat pan and a seat cushion and causing the airbag to be inflated upon front collision of the vehicle to push a front portion of the seat cushion from the lower side. Further specifically, the present invention relates to a passenger constraining apparatus in which an inflator is installed outside of the airbag and gas is introduced into the airbag from the inflator by a gas introducing member such as a duct.

As a system for constraining a passenger in an automotive vehicle upon collision, JP-A-2002-145002 (Patent Document 1) discloses a passenger constraining apparatus in which an inflatable airbag is arranged between the seat cushion and the seat pan, so that the front portion of the seat cushion is pushed upward by inflating the airbag upon collision of the vehicle in order to prevent a submarine phenomenon that the submarine phenomena such that the passenger tends to slip through a lower side of a lap belt upon front collision even though the seatbelt is fastened.

In the JP-A-2002-145002, an inflator (gas generator) for inflating the airbag is installed outside the airbag, the inflator and the airbag are connected with a pipe, and gas is introduced into the airbag from the inflator through the pipe.

In the passenger constraining apparatus disclosed in JP-A-2002-145002, the airbag is only connected to the pipe for introducing gas by fastening a band, and is not fixed to the seat pan.

It is an object of the present invention to provide a passenger constraining apparatus in which an inflator installed outside an airbag so as to introduce gas into the airbag from the inflator via a gas introducing member, wherein an airbag can be fixed to a seat pan by using the gas introducing member. This object is achieved with the features of the claims.

A passenger constraining apparatus according to the present invention (Claim 1) includes an airbag arranged between a seat pan and a seat cushion and is capable of being inflated so as to press the seat cushion from the lower side and an inflator for inflating the airbag, the inflator being installed outside the airbag so that gas from the inflator is introduced into the airbag, characterized in that a midsection of the airbag in the direction of the width of the seat pan is fixed to the seat pan with a mounting member, the mounting member includes an inner member arranged in the interior of the airbag for holding down a bottom portion of the airbag against the seat pan, an extending member continuing from the inner member and extending outwardly of the airbag for being fixed to the seat pan, and a gas channel passing through the extending member and being communicated with the interior of the airbag, and the gas from the inflator can be introduced into the airbag via the gas channel.

A passenger constraining apparatus according to Claim 2 is a passenger constraining apparatus including an airbag arranged between a seat pan and a seat cushion and is capable of being inflated so as to press the seat cushion from the lower side and an inflator for inflating the airbag, the inflator being installed outside the airbag so that gas from the inflator is introduced to the interior of the airbag, characterized in that a midsection of the airbag in the direction of the width of the seat pan is fixed to the seat pan with a mounting member, the mounting member includes an inner member arranged in the interior of the airbag for holding down a bottom portion of the airbag against the seat pan, an extending member continuing from the inner member and extending outwardly of the airbag, a gas channel passing through the extending member and being communicated with the interior of the airbag, and a fixed member continuing from the inner member and extending outwardly of the airbag for being fixed to the seat pan, and the gas from the inflator can be introduced into the airbag via the gas channel.

A passenger constraining apparatus according to Claim 3 is a passenger constraining apparatus including an airbag arranged between a seat pan and a seat cushion and is capable of being inflated so as to press the seat cushion from the lower side and an inflator for inflating the airbag, the inflator being installed outside the airbag so that gas from the inflator is introduced to the interior of the airbag, characterized
in that a retainer for mounting the airbag to the seat pan is provided under the airbag, a midsection of the airbag in the direction of the width of the seat pan is fixed to the retainer with a mounting member, the mounting member includes an inner member arranged in the interior of the airbag for holding down a bottom portion of the airbag against the retainer, an extending member continuing from the inner member and extending outwardly of the airbag for being fixed to the retainer, and a gas channel passing through the extending member and being communicated with the interior of the airbag, and the gas from the inflator can be introduced into the airbag via the gas channel.

A passenger constraining apparatus according to Claim 4 is a passenger constraining apparatus including an airbag arranged between a seat pan and a seat cushion and is capable of being inflated so as to press the seat cushion from the lower side and an inflator for inflating the airbag, the inflator being installed outside the airbag so that gas from the inflator is introduced to the interior of the airbag, characterized in that a retainer for mounting the airbag to the seat pan is provided under the airbag, a midsection of the airbag in the direction of the width of the seat pan is fixed to the retainer with a mounting member, the mounting member includes an inner member arranged in the interior of the airbag for holding down a bottom portion of the airbag against the retainer, an extending member continuing from the inner member and extending outwardly of the airbag, a gas channel passing through the extending member and being communicated with the interior of the airbag, and a fixed member continuing from the inner member and extending outwardly of the airbag for being fixed to the retainer, and the gas from the inflator can be introduced into the airbag via the gas channel.

In any one of Claims 1 to 4, the passenger constraining apparatus according to Claim 5 is characterized in that a diffuser for changing the direction of a gas flow discharged in the airbag from the gas channel to the direction of the width of the seat pan is provided at a position near an outlet port of the gas channel inside the airbag.
Preferably, the airbag is capable of being inflated so as to press or push a front portion of the seat cushion from the lower side.

According to the passenger constraining apparatus in Claim 1, the midsection of the airbag in the direction of the width of the seat pan is fixed to the seat pan with the mounting member. When mounting the airbag to the seat pan, the bottom portion of the airbag is held down against the seat pan with the inner member arranged in the interior of the airbag, the extending member continuing from the inner member is extended outwardly of the airbag, and is fixed to the seat pan. Accordingly, the bottom surface of the airbag is clamped and fixed between the inner member and the seat pan. The extending member is provided with the gas channel passing through the extending member and being communicated with the airbag, so that the gas is introduced from the inflator into the airbag through the gas channel.

In this manner, according to the passenger constraining apparatus in Claim 1, since the airbag is mounted to the seat pan with the mounting member which also serves as a gas introducing member from the inflator to the interior of the airbag, it is not necessary to provide a specific part for introducing gas from the inflator to the interior of the airbag and a specific part for mounting the airbag to the seat pan separately. Accordingly, the configuration of the passenger constraining apparatus can be simplified, and the assembly work of the passenger constraining apparatus to the seat pan can be facilitated.

According to the passenger constraining apparatus in Claim 2, the fixed member which is continued from the inner member is provided on the mounting member separately from the extending member having the gas channel to the interior of the airbag, and the fixed member is extended outwardly of the airbag and fixed to the seat pan.

The passenger constraining apparatus in Claim 2 also achieves the same effects and advantages as the passenger constraining apparatus in Claim 1.

According to the passenger constraining apparatus in Claim 3, the retainer of mounting the airbag to the seat pan is provided under the airbag, and the midsection of the airbag in the direction of the width of the seat pan is attached to the retainer with the mounting member.

When mounting the airbag to the retainer, the extending member continuing from the inner member is extended outwardly of the airbag and fixed to the retainer by holding down the bottom portion of the airbag against the retainer with the inner member arranged in the interior of the airbag. Accordingly, the bottom portion of the airbag is clamped and fixed between the inner member and the retainer. The extending member is provided with the gas channel which passes through the extending member and being communicated with the interior of the airbag, so that gas is introduced into the airbag from the inflator via the gas channel. The airbag is mounted to the seat pan by mounting the retainer to the seat pan.

In this manner, in the passenger constraining apparatus in Claim 3, since the airbag is mounted to the retainer by the mounting member which also serves as the gas introducing member from the inflator to the interior of the airbag, it is not necessary to provide a specific part for introducing gas from the inflator to the airbag and a specific part for mounting the airbag to the retainer separately. Accordingly, the configuration of the passenger constraining apparatus can be simplified, and the assembly work of the passenger constraining apparatus to the retainer can be facilitated.

In the passenger constraining apparatus in Claim 3, the passenger constraining apparatus can be unitized by mounting the airbag to the retainer with the mounting member in advance. Therefore, the assembly work for mounting the passenger constraining apparatus to the seat pan can be carried out quickly.

According to the passenger constraining apparatus in Claim 4, the fixed member continued from the inner member is provided on the mounting member separately from the extending member having the gas channel to the airbag is provide separately from the extending member having the gas channel to the interior of the airbag, and the fixed member is extended outwardly of the airbag and fixed to the retainer.

In the passenger constraining apparatus in Claim 4 as well, the same effects and advantages as in the passenger constraining apparatus in Claim 3 is achieved.

In the passenger constraining apparatus in Claims 1 to 4 described above, the midsection of the airbag in the direction of the width of the seat pan is mounted to the seat pan by the mounting member which also serves as the gas introducing member to the airbag, the airbag mounting member or the gas introducing member are not provided on both end sides of the airbag in the direction of the width of the seat pan. Therefore, the airbag can be extended longly from a position near the one end to a position neat the other end of the seat pan in the direction of the width, and hence the passenger constraining effect by this airbag can be improved.

According to the passenger constraining apparatus in Claim 5, since the diffuser for changing the direction of the gas flow discharged in the airbag from the gas channel to the direction of the width of the seat pan is provided at the position near the outlet port of the gas channel inside the airbag, the inflation of the airbag in the direction of the width of the seat pan is accelerated.

Referring now to the drawings, embodiments of the present invention will be described:
Fig. 1 is a perspective view of a seat pan showing a passenger constraining apparatus according to an embodiment;
Fig. 2 is a cross-sectional view taken along the line II-II in Fig. 1;
Fig. 3 illustrates perspective views of an airbag mounting member of the passenger constraining apparatus in Fig. 1;
Fig. 4 is a perspective view of the passenger constraining apparatus in Fig. 1 viewed from a bottom side of the airbag;
Fig. 5 is a perspective view of the seat pan showing the passenger constraining apparatus according to the embodiment;
Fig. 6 is a cross-sectional view taken along the line VI-VI in Fig. 5;
Fig. 7 is a perspective view of the seat pan showing the passenger constraining apparatus according to an embodiment;
Fig. 8 is a cross-sectional view taken along the line VIII-VIII in Fig. 7; and
Fig. 9 is a perspective view of a diffuser according to the embodiment.

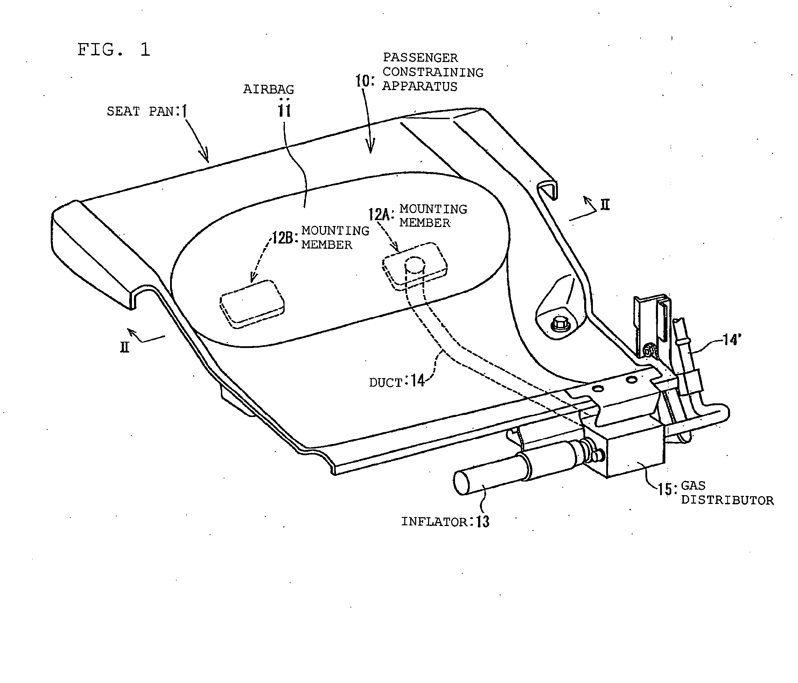

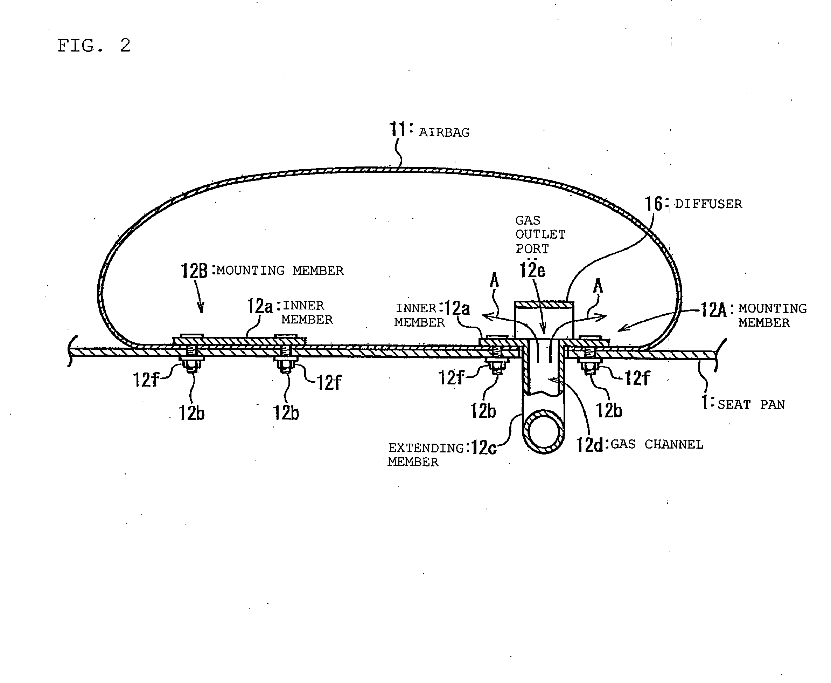

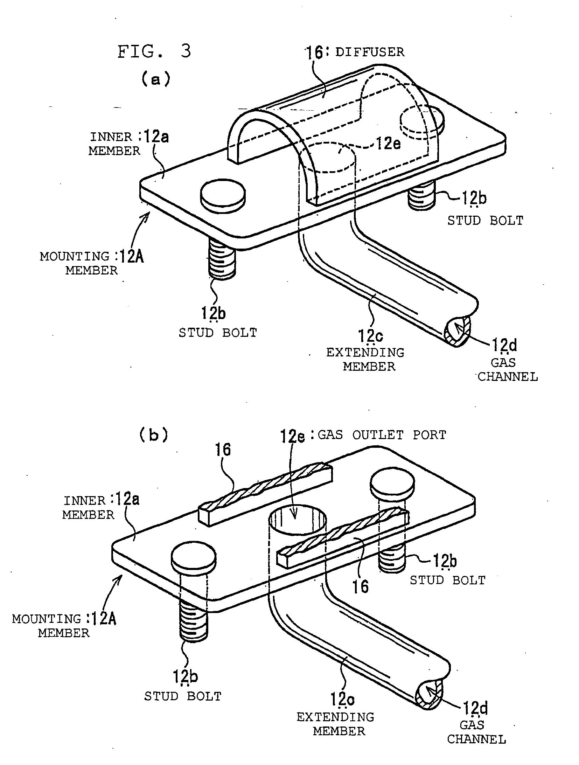

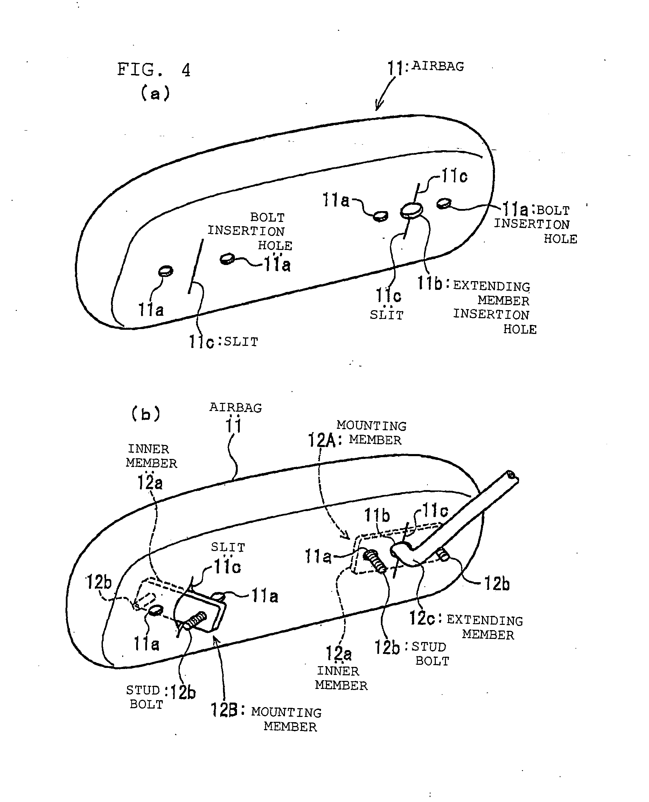

Fig. 1 is a perspective view of a seat pan showing a passenger constraining apparatus according to an embodiment; Fig. 2 is a cross-sectional view taken along the line II-II in Fig. 1; Figs. 3(a), (b) are perspective views of an airbag mounting member of the passenger constraining apparatus; and Fig. 4 is a perspective view of the passenger constraining apparatus of Fig. 1 viewed from a bottom side of the airbag. Fig. 3(b) is a cross-sectional view, partly broken, of a diffuser from the mounting member in Fig. 3(a).
Fig. 4(b) is a drawing showing a procedure of installation of the mounting member in the airbag shown in Fig. 4(a).

A seat pan 1 is arranged on a lower side of a seat cushion (not shown) of a seat to be mounted to a vehicle, and an airbag 11 of a passenger constraining apparatus 10 is arranged above a front portion of the seat pan 1 (between the seat cushion and the seat pan 1). The airbag 11 extends in the direction of lateral width of the seat pan 1 (seat). In the respective drawings, the airbag 11 is shown in an inflated state. However, the airbag 11 is folded along an upper surface of the seat pan 1 with the thickness thereof reduced in the normal state.

The passenger constraining apparatus 10 includes the airbag 11, mounting members 12A, 12B for mounting the airbag 11 to the seat pan 1, and an inflator 13 or the like for inflating the airbag 11. The inflator 13 is installed outside the airbag 11 (on a rear end side of the seat pan 1 in this embodiment), and a duct (pipe) 14 for introducing gas from the inflator 13 to the airbag 11 is provided so as to extend between the inflator 13 and the airbag 11. The duct 14 is led along a back (lower) surface side of the seat pan 1.

Although not shown, in this embodiment, an airbelt to be led along a front side of a passenger seated on the seat for constraining the passenger on the seat by inflating upon collision of the vehicle is provided, and the inflator 13 is a common gas supply source for the airbag 11 and the airbelt. A gas distributor 15 for distributing gas injected from a gas injection port to the airbag 11 and the airbelt is connected to the gas injection port (not shown) of the inflator 13. One end side of the duct 14 is connected to a gas outlet port of the gas distributor 15 for the airbag. Reference numeral 14' in Fig. 1 designates a duct which is connected at one end side to the gas outlet port of the gas distributor 15 for the airbelt. The other end side of the duct 14' is connected to the airbelt.

The mounting member 12A is arranged at a position on the airbag 11 on one end side with respect to a center in the longitudinal direction thereof, and the mounting member 12B is arranged at a position on the airbag 11 on the other end side with respect to the center in the longitudinal direction thereof. In this embodiment, the mounting member 12A also serves as a gas introducing member into the airbag 11, and the mounting member 12B is only for fixing the airbag 11 to the seat pan 1.

The mounting member 12A includes an inner member 12a arranged in the airbag 11 for holding down a bottom surface of the airbag 11 against the sea pan 1, stud bolts 12b as fixed members projecting downward from a lower surface of the inner member 12a, an extending member 12c extending downward from the lower surface of the inner member 12a, and a gas channel 12d communicated with an upper surface side (inside the airbag 11) of the inner member 12a through the extending member 12c.

In this embodiment, the inner member 12a is formed into a substantially rectangular plate shape in this embodiment, and the length in the longitudinal direction is smaller than a half the length of the airbag 11 in the longitudinal direction. The inner member 12a is superimposed on the bottom surface of the airbag 11 with the longitudinal direction oriented in the longitudinal direction of the airbag 11. Two of the stud bolts 12b are provided at a distance in the longitudinal direction of the inner member 12a, and the extending member 12c is arranged between the stud bolts 12b, 12b (near a center of the inner member 12a in the longitudinal direction).

In this embodiment, one end side of the extending member 12c is formed of a tubular member (pipe) connected to the lower surface of the inner member 12a with the axial direction oriented in the vertical direction, and an inner side of the tubular member corresponds to the gas channel 12d. The gas channel 12d passes through the inner member 12a and opens at a position near the longitudinal center of the upper surface of the inner member 12a. An opening on the upper surface of the inner member 12a corresponds to a gas outlet port 12e.

The extending member 12c is formed into a substantially L-shape so as to extend rearwardly of the seat pan 1 from a mid point thereof. The duct 14 is connected to a distal end of the extending member 12c via a joint member (not shown). However, one or more of separate tubular members or joint member may be connected in series between the extending member 12c and the duct 14. Alternatively, the extending member 12c and the duct 14 (from the mounting member 12A to the end of the duct 14 on the inflator side) may be formed continuously and integrally. The extending member 13c and the duct 14 may be formed of flexible pipe which can be bent freely, and the extending member 12c may be connected to the duct 14 via the flexible pipe.

In this embodiment, a diffuser 16 for changing the direction of gas flow injected from the gas outlet port 12e into the direction longitudinally of the airbag 11 is provided on the mounting member 12A. As shown in Fig. 3(a), in this embodiment, the diffuser 16 has a substantially semi-cylindrical shape, and is installed on the upper surface of the inner member 12a so as to straddle the gas outlet port 12e from above with the direction of the axial centerline oriented in the longitudinal direction of the inner member 12a. Axial both end sides of the diffuser 16 are opened toward the longitudinal direction of the inner member 12a.

The diffuser 16 may be provided integrally with the inner member 12a, or may be provided separately and mounted to the inner member 12a afterwards.

In this embodiment, the mounting member 12B has the same configuration as the mounting member 12A other than the point that the extending member 12c (and the gas channel 12d and the gas outlet port 12e) and the diffuser 16 are omitted from the mounting member 12A.

As shown in Figs. 4(a) and (b), in an area of the bottom surface of the airbag 11 where the mounting member 12A is arranged (the inner member 12a of the mounting member 12A is overlapped), a pair of bolt insertion holes 11a, 11a through which the respective stud bolts 12b, 12b of the mounting member 12A are inserted and an extending member insertion hole 11b through which the extending member 12c is inserted are provided. As shown in the drawing, the bolt insertion holes 11b, 11b are arranged at a distance in the longitudinal direction of the airbag 11, and the extending member insertion hole 11b is provided at a position near the center between the bolt insertion holes 11a, 11a.

In an area of the bottom surface of the airbag 11 where the mounting member 12B is arranged (where the inner member 12a of the mounting member 12B is overlapped), a pair of bolt insertion holes 11a, 11a where the respective stud bolts 12b, 12b of the mounting member 12B are inserted are provided. As shown in the drawing, bolt insertion holes 11b, 11b for the mounting member 12B are also arranged at different positions in the longitudinal direction of the airbag 11.

In this embodiment, the mounting members 12A, 12B are arranged in the airbag 11 through slits 11c provided on the bottom surface of the airbag 11 as shown in Fig. 4(b). The slits 11c are formed in an area of the bottom surface of the airbag 11 where the respective inner members 12a of the mounting members 12A, 12B are overlapped.

Subsequently, a procedure of assembly of the passenger constraining apparatus 10 (assembly to the seat pan 1) will be described.

As shown in Fig. 4(b), the mounting members 12A, 12B are inserted into the airbag 11 from the respective slits 11c on the bottom surface of the airbag 11, respectively. Then, the respective stud bolts 12b of the mounting members 12A, 12B are extended outwardly of the airbag 11 through the respective bolt insertion holes 11a on the bottom surface of the airbag 11, and the extending member 12c of the mounting member 12A is inserted through the extending member insertion hole 11b so as to be extended outwardly of the airbag 11, and then the respective inner members 12a of the mounting members 12A, 12B are superimposed on the bottom surface of the airbag 11 (on the inner surface of the bottom portion).

Subsequently, the airbag 11 is arranged on the seat pan 1 while inserting the extending member 12c and the respective stud bolts 12b extending from the bottom surface of the airbag 11 are inserted into the extending member insertion hole (reference numeral is not provided) and the respective bolt insertion holes (reference numeral is not provided) provided on the seat pan 1 respectively. Then, nuts 12f are tightened onto the respective stud bolts 12b from a back side of the seat pan 1. Accordingly, the respective mounting members 12A, 12B are fixed to the seat pan 1 and the bottom surface of the airbag 11 is clamped and fixed between the respective inner members 12a of the mounting members 12A, 12B and the seat pan 1.

The inflator 13 is mounted to a rear end portion of the seat pan 1. The gas distributor 15 may be connected to the inflator 13 before mounting the inflator 13 to the seat pan 1, or the gas distributor 15 may be connected to the inflator 13 after the inflator 13 is mounted to the seat pan 1.

Then, the extending member 12c of the mounting member 12A and the gas outlet port of the gas distributor 15 for the airbag are connected with the duct 14, whereby installation of the passenger constraining apparatus 10 to the seat pan 1 is completed.

In this embodiment, separately from the passenger constraining apparatus 10, the airbelt is installed on the seat, and the airbelt and the gas outlet port of the gas distributor 15 for the airbelt are connected with a duct 14'.

In the passenger constraining apparatus 10, since the mounting member 12A also serves as the gas introducing member from the inflator 13 to the interior of the airbag 11, it is not necessary to provide a specific part for introducing gas from the inflator 13 to the airbag 11 and a specific part for mounting the airbag 11 to the seat pan 1 separately. Accordingly, the configuration of the passenger constraining apparatus 10 can be relatively simplified, and the assembly work of the passenger constraining apparatus 10 to the seat pan 1 can be facilitated.

In this passenger constraining apparatus, since the airbag 11 is attached to the seat pan 1 by the respective mounting members 12A, 12B at a midsection thereof in the longitudinal direction, the airbag mounting member or the gas introducing member for introducing gas to the interior of the airbag 11 do not exist on both end sides of the airbag 11 in terms of the longitudinal direction thereof. Therefore, the airbag 11 can be extended longly from a position near one end to a position near the other end in the direction of width of the seat pan 1.

An operation of the passenger constraining apparatus 10 is as follows.

When the front collision of the vehicle is detected, the inflator 13 is activated to inject gas. The gas from the inflator 13 is distributed and supplied to the airbag 11 (the duct 14) and the airbelt (the duct 14') via the gas distributor 15.

The gas distributed from the inflator 13 to the duct 14 side passes through the duct 14 and the gas channel 12d of the extending member 12c, and is discharged from the gas outlet port 12e to the interior of the airbag 11. Accordingly, the airbag 11 is inflated, and a front portion of the seat cushion of the seat is pushed upward or is hardened by being compressed by the upward pushing force by the inflated airbag 11, whereby the forward movement of a lumber part of the passenger seated on the seat is prevented or constrained.

The gas distributed to the duct 14' is introduced through the duct 14' into the airbelt. Accordingly, the airbelt is also inflated, and the passenger is constrained on the seat by the inflated airbelt.

In this embodiment, when the gas is discharged from the gas outlet port 12e into the airbag 11, the direction of gas flow is changed toward the both end sides of the airbag 11 in terms of the longitudinal direction thereof as shown by an arrow A in Fig. 2 by the diffuser 16. Accordingly, the discharged gas is prevented from directly hitting on an upper surface of the airbag 11 and inflation of the airbag 11 in the longitudinal direction is accelerated.

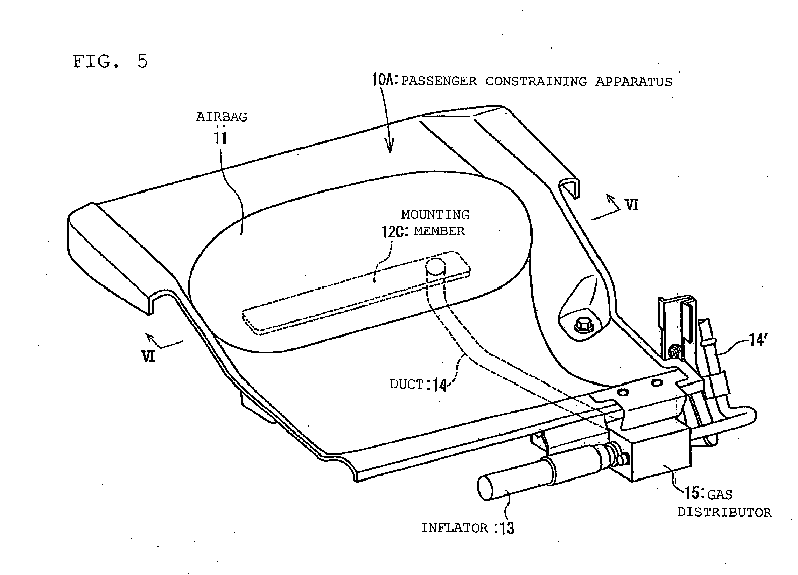

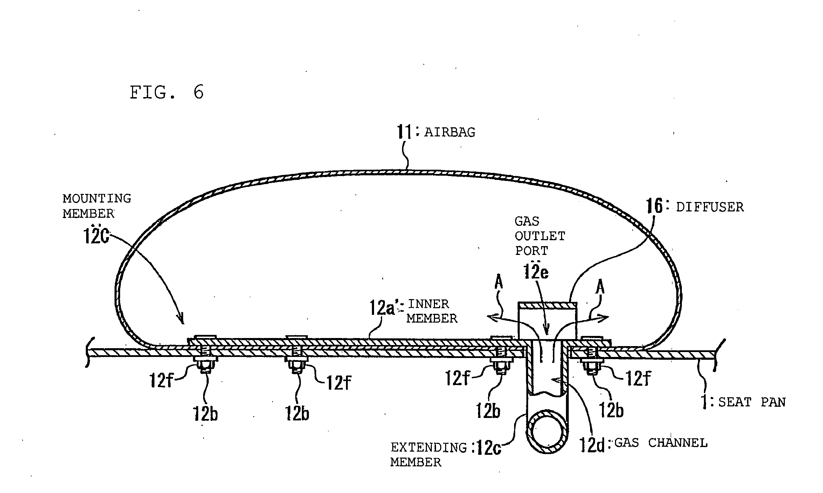

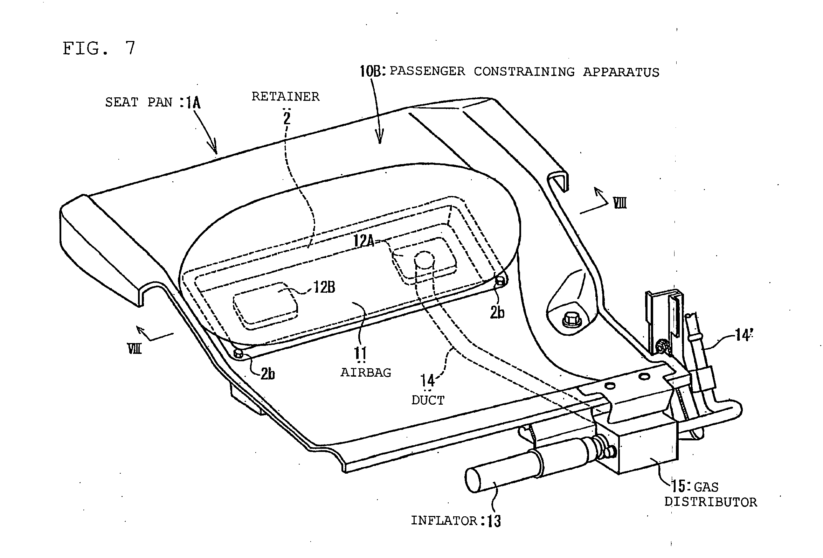

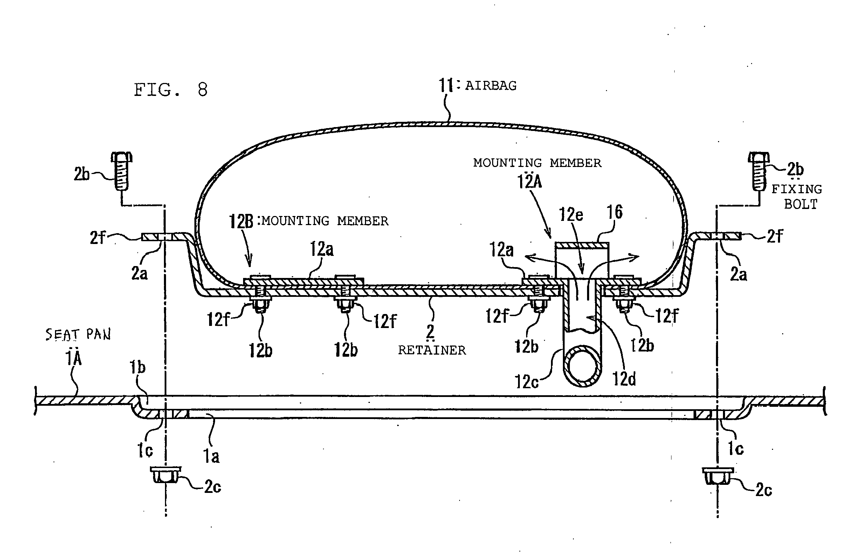

In the above-described embodiment, the airbag 11 is mounted to the seat pan 1 by the two mounting members 12A, 12B. However, the number of mounting members is not limited thereto. For example, as in the case of a passenger constraining apparatus 10A in Figs. 5 and 6, the airbag 11 can be mounted to the seat pan 1 by a single mounting member 12C, or the airbag 11 may be mounted to the seat pan 1 with three or more mounting members. Fig. 5 is a perspective view of the passenger constraining apparatus 10A in which the airbag 11 is mounted to the seat pan 1 by the single mounting member 12C, and Fig. 6 is a cross-sectional view taken along the line VI-VI in Fig. 5.

The mounting member 12C of the passenger constraining apparatus 10A shown in Figs. 5, 6 includes a band-shaped inner member 12a' which extends continuously from a position near one end of the airbag 11 to a position near the other end thereof in terms of the longitudinal direction of the airbag 11. As shown in Fig. 6, the mounting member 12C is configured in such a manner that the mounting members 12A, 12B in the above-described embodiment are connected by the band-shaped inner member 12a'.

Other configurations of the passenger constraining apparatus 10A are the same as the passenger constraining apparatus 10 in Figs. 1 to 4 described above, and the parts in Figs. 5, 6 which are the same as those in Figs. 1 to 4 are represented by the same reference numerals. Although the airbag 11 is shown in the inflated state in Figs. 5 and 6, it is folded along the upper surface of the seat pan 1 with the thickness thereof reduced in the normal state.

In the passenger constraining apparatus 10A, the airbag 11 is mounted to the seat pan 1 with the single mounting member 12C, the mounting work of the airbag 11 to the seat pan 1 can further be facilitated.

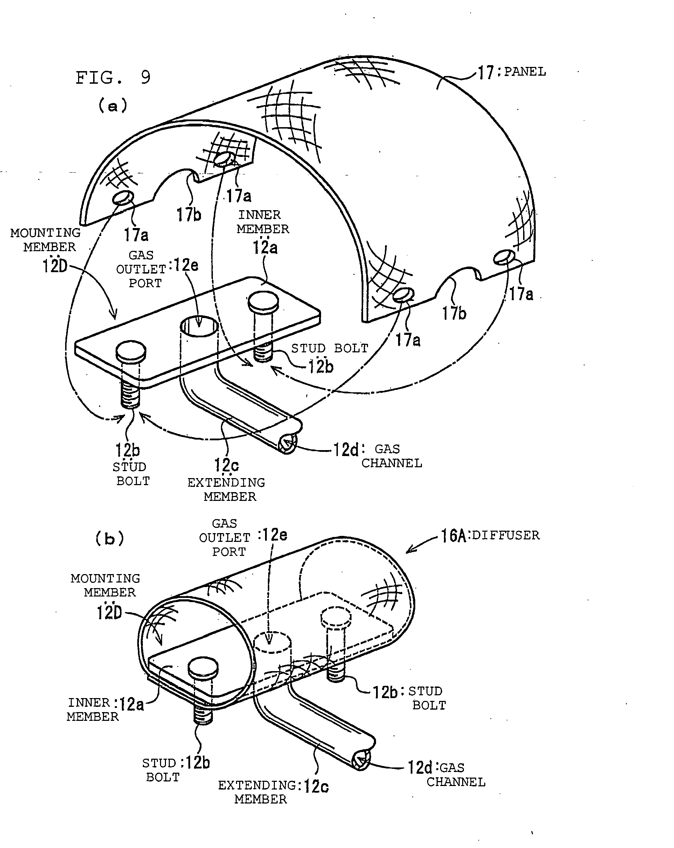

Fig. 7 is a perspective view of a seat pan showing the passenger constraining apparatus according to another embodiment, and Fig. 8 is a cross-sectional view taken along the line VIII-VIII in Fig. 7.

In a passenger constraining apparatus 10B in this embodiment, the airbag 11 is stored in a retainer 2 in the shape of a container which is opened on an upper surface thereof in the folded state. The retainer 2 has a substantially rectangular shape elongated in the lateral direction in plan view. A flange 2f is formed on a peripheral edge of an upper opening of the retainer 2. The airbag 11 is arranged so as to be extended in the lateral direction in the retainer 2, and midsections on the one end side and on the other end side thereof with respect to the center in the longitudinal direction are fixed to the bottom surface of the retainer 2 with the mounting members 12A, 12B respectively.

The mounting procedure of the airbag 11 to the retainer 2 is the same as the previous embodiment shown in Figs. 1 to 4 other than the point that the airbag 11 is mounted to the retainer 2 instead of mounting the same to the seat pan 1A.

In other words, the mounting members 12A, 12B are arranged in the airbag 11, and the respective stud bolts 12b of the mounting members 12A, 12B are extended outwardly of the airbag 11 through the respective bolt insertion holes 11a on the bottom surface of the airbag 11, and the extending member 12c of the mounting member 12A is inserted through the extending member insertion hole 11b so as to be extended outwardly of the airbag 11, and then the respective inner members 12a of the mounting members 12A, 12B are superimposed on the bottom surface of the airbag 11 (on the inner surface of the bottom portion).

Subsequently, the airbag 11 is arranged on the bottom surface of the retainer 2 while inserting the extending member 12c and the respective stud bolts 12b extended from the bottom surface of the airbag 11 through the extending member insertion hole (reference numeral is not provided) and the respective bolt insertion holes (reference numeral is not provided) provided on the bottom surface of the retainer 2 respectively. Then, the nuts 12f are tightened onto the respective stud bolts 12b from a back side of the retainer 2. Accordingly, the respective mounting members 12A, 12B are fixed to the retainer 2 and the bottom surface of the airbag 11 is clamped and fixed between the respective inner members 12a of the mounting members 12A, 12B and the bottom surface of the retainer 2.

After the airbag 11 is folded in the retainer 2, a lid (not shown) is mounted so as to cover the upper opening of the retainer 2, and a peripheral portion of the lid is secured to the flange 2f with securing members (not shown). However, it is also possible that the airbag 11 is mounted to the retainer 2 in a state of being folded flatly in advance and kept in shape. The lid is torn or separated from the retainer 2 when the airbag 11 is inflated so as to allow upward protrusion of the airbag 11.

The retainer 2 in which the airbag 11 is stored is installed on the front portion of the seat pan 1A. In this embodiment, an opening 1a for installing the passenger constraining apparatus is provided on the front portion of the seat pan 1A, and the retainer 2 is arranged in the opening 1a. In this case, the flange 2f of the retainer 2 is engaged with a recessed portion 1b formed on a peripheral edge of the opening 1a. Subsequently, bolts 2b are inserted into respective bolt insertion holes 2a, 1c provided so as to penetrate through the flange 2f and the recessed portion 1b, and nuts 2c are tightened to the bolts 2b. Accordingly, the installation of the retainer 2 to the seat pan 1A is completed. However, the installation structure of the retainer 2 to the seat pan 1A is not limited thereto.

Other configurations of the passenger constraining apparatus 10A are the same as the passenger constraining apparatus 10 shown in Figs. 1 to 4 described above. In Figs. 7 and 8 as well, the airbag 11 is shown in the inflated state. However, the airbag 11 is stored in the retainer 2 in the folded state with the thickness thereof reduced, and the opening on the upper surface of the retainer 2 is covered by the lid in the normal state as described above.

With the passenger constraining apparatus 10A configured as described above, the same effects and advantages as the passenger constraining apparatus 10 shown in Figs. 1 to 4 described above are achieved.

In this passenger constraining apparatus 10A, since the airbag 11 can be mounted to the retainer 2 with the mounting members 12A, 12B into a unit in advance, the installation work of the airbag 11 to the seat pan 1A can be performed quickly.

In the respective embodiments described above, the diffuser 16 is provided integrally with the mounting members 12A, 12C. However, the diffuser can be provided separately from the mounting member. The material of the diffuser may be the same as the mounting member, and may be different therefrom. Fig. 9 is a perspective view showing a diffuser 16A configured separately from the mounting member. Fig. 9(a) shows a procedure for mounting the diffuser 16A to a mounting member 12D of a panel 17, and Fig. 9(b) is a perspective view after the diffuser 16A is completely mounted.

The mounting member 12D in this embodiment has a configuration in which the diffuser 16 is omitted from the mounting member 12A in the passenger constraining apparatus 10 shown in Figs. 1 to 4 described above.

The diffuser 16A in this embodiment is configured with the panel 17 of a substantially rectangular shape formed of cloth material which is the same as the panel configuring the airbag 11. As shown in Fig. 9(a) to Fig. 9(b), the diffuser 16A is configured by rolling the panel 17 into a cylindrical shape so that edge portions on both end sides thereof are overlapped on a lower surface side of an inner member 16a and surround the inner member 16a.

The edge portions on the both end sides of the panel 17 are provided with openings 17a for inserting the stud bolts 12b respectively, and the both end sides of the panel 17 are engaged with the mounting member 12D by inserting the respective stud bolts 12b into the openings 17a. Reference numeral 17b designates notches formed respectively on the edge portions on the both end sides of the panel 17 for engaging the extending member 12c.

The respective embodiments of the present invention shown above are illustrative only, and the present invention is not limited to the above-described embodiments.

In the above-described embodiments, the stud bolts as fixed members are provided separately from the extending member so as to project from the inner member of the mounting member, and the mounting member is fixed to the seat pan or the retainer with the stud bolts. However, the fixing structure of the mounting member to the seat pan or the retainer is not limited thereto, and it is also possible to omit the stud bolts (fixed member) and fix the mounting member to the seat pan or to the retainer with the extending member.

In this case, for example, the mounting member may be fixed to the seat pan or the retainer by forming a male screw portion on an outer peripheral surface on a proximal side of the extending member, inserting the extending member through the extending member insertion hole on the seat pan or the retainer, and tightening the nut to the mail screw portion (the proximal side of the extending member) from the back side of the seat pan or the retainer.

## Claims

1. A passenger constraining apparatus comprising: an airbag arranged between a seat pan and a seat cushion and is capable of being inflated so as to press the seat cushion from the lower side; and an inflator for inflating the airbag, the inflator being installed outside the airbag so that gas from the inflator is introduced into the airbag,
**characterized in that** a midsection of the airbag in the direction of the width of the seat pan is fixed to the seat pan with a mounting member,
**in that** the mounting member includes:
an inner member arranged in the interior of the airbag for holding down a bottom portion of the airbag against the seat pan,
an extending member continuing from the inner member and extending outwardly of the airbag for being fixed to the seat pan, and a gas channel passing through the extending member and being communicated with the interior of the airbag, and
**in that** the gas from the inflator can be introduced into the airbag via the gas channel.

2. A passenger constraining apparatus comprising: an airbag arranged between a seat pan and a seat cushion and is capable of being inflated so as to press the seat cushion from the lower side; and an inflator for inflating the airbag, the inflator being installed outside the airbag so that gas from the inflator is introduced to the interior of the airbag,
**characterized in that** a midsection of the airbag in the direction of the width of the seat pan is fixed to the seat pan with a mounting member,
**in that** the mounting member includes:
an inner member arranged in the interior of the airbag for holding down a bottom portion of the airbag against the seat pan,
an extending member continuing from the inner member and extending outwardly of the airbag,
a gas channel passing through the extending member and being communicated with the interior of the airbag,
and a fixed member continuing from the inner member and extending outwardly of the airbag for being fixed to the seat pan, and
**in that** the gas from the inflator can be introduced into the airbag via the gas channel.

3. A passenger constraining apparatus comprising: an airbag arranged between a seat pan and a seat cushion and is capable of being inflated so as to press the seat cushion from the lower side; and an inflator for inflating the airbag, the inflator being installed outside the airbag so that gas from the inflator is introduced to the interior of the airbag,
**characterized in that** a retainer for mounting the airbag to the seat pan is provided under the airbag, a midsection of the airbag in the direction of the width of the seat pan is fixed to the retainer with a mounting member,
the mounting member includes:
an inner member arranged in the interior of the airbag for holding down a bottom portion of the airbag against the retainer,
an extending member continuing from the inner member and extending outwardly of the airbag for being fixed to the retainer, and
a gas channel passing through the extending member and being communicated with the interior of the airbag, and
**in that** the gas from the inflator can be introduced into the airbag via the gas channel.

4. A passenger constraining apparatus comprising: an airbag arranged between a seat pan and a seat cushion and is capable of being inflated so as to press the seat cushion from the lower side and an inflator for inflating the airbag, the inflator being installed outside the airbag so that gas from the inflator is introduced to the interior of the airbag,
**characterized in that** a retainer for mounting the airbag to the seat pan is provided under the airbag,
a midsection of the airbag in the direction of the width of the seat pan is fixed to the retainer with a mounting member,
the mounting member includes:
an inner member arranged in the interior of the airbag for holding down a bottom portion of the airbag against the retainer,
an extending member continuing from the inner member and extending outwardly of the airbag,
a gas channel passing through the extending member and being communicated with the interior of the airbag, and
a fixed member continuing from the inner member and extending outwardly of the airbag for being fixed to the retainer, and
**in that** the gas from the inflator can be introduced into the airbag via the gas channel.

5. The passenger constraining apparatus according to any one of Claims 1 to 4, **characterized in that** a diffuser for changing the direction of a gas flow discharged in the airbag from the gas channel to the direction of the width of the seat pan is provided at a position near an outlet port of the gas channel inside the airbag.

6. The passenger constraining apparatus of any one of claims 1 to 5, wherein the airbag is capable of being inflated so as to press a front portion of the seat cushion from the lower side.
